Europäisches Patentamt

European Patent Office

Office européen des brevets

(19)

(11) Publication number: **0 045 823**
**A1**

(12) **EUROPEAN PATENT APPLICATION**

(21) Application number: **80302718.4**

(22) Date of filing: **08.08.80**

(51) Int. Cl.³: **B 01 J 39/20**
**B 01 J 41/14, B 01 J 47/00**
**D 06 M 15/00**

(43) Date of publication of application:
**17.02.82 Bulletin 82/7**

(84) Designated Contracting States:
**CH DE FR GB IT LI NL**

(71) Applicant: **TOKYO ORGANIC CHEMICAL INDUSTRIES, LTD.**
**2-1, Toshima 5-chome Kita-ku**
**Tokyo(JP)**

(72) Inventor: **Akiyama, Hiroshi**
**15-4, 1-chome, Higashiowada Ishikawa-shi**
**Chiba(JP)**

(72) Inventor: **Naotsuka, Hideo**
**73-2, Higashi-Omiya 4-chome**
**Omiya Saitama(JP)**

(74) Representative: **Angell, David Whilton et al,**
**Rohm and Haas Company Patent Department**
**Chesterfield House Barter Street**
**London WC1A 2TP(GB)**

(54) **Fibrous ion exchange materials, their production and use.**

(57) Fibrous ion exchange materials comprise a macroporous fibrous mass such as a woven or non-woven fabric, having macroreticular ion exchange resin in the interstices between the fibers. They may be made by taking up monomer into the interstices and there polymerising the monomer in an aqueous medium in the presence of organic solvent insoluble or only sparingly soluble in water to form macroreticular polymer to which ion exchange functional groups are added. The materials may be used to remove or exchange ions in fluid, especially liquid or vapour, media.

EP 0 045 823 A1

Croydon Printing Company Ltd.

FIBROUS ION EXCHANGE MATERIALS,

THEIR PRODUCTION AND USE

This invention is concerned with fibrous ion exchange materials,. their production and use. The materials of the invention have a fibrous matrix with macroreticular ion exchange resin distributed in the interstices between fibers therein.

Ion exchangers formed of polyvinyl monomers or mixed monovinyl and polyvinyl monomers, particularly those based on styrene, are generally granular in form, and measure between about 0.300 mm (50 mesh) and about 1.20 mm (16 mesh) in particle diameter. They are generally manufactured by suspension (dispersion) polymerization. The largest particle diameters which may be manufactured practically by such a polymerization process are limited by the largest stable monomer droplets that form in the aqueous suspension; this is about 1.4 mm (14 mesh).

The field in which uses are found for ion exchangers has expanded to a point where polymeric ion exchangers in larger particle sizes, or in special shapes, such as large sheets, large tubes and the like, are needed for special uses. These exchangers must be physically and chemically stable, and must possess practical levels of ion exchange capacity.

Japanese Unscreened Patent Publication No. 20390/1977 discloses a method wherein a monomer mixture (divinylbenzene, either styrene or vinylbenzyl chloride, and a polymerization initiator) is fixed in a structure of fibers incapable of being swelled or dissolved at least at the temperature at which the mixture polymerizes, the mixture is allowed to polymerize in-situ in the fiber structure, the fiber component is removed from the resultant polymer by either decomposition or dissolution, and thereafter ion-exchange functionality is introduced into the remaining polymer. Usually this ion exchanger must undergo an additional treatment, such as cutting and shaping, after the polymerization step. The particle size or shape in which this ion exchanger is formed, however, does not necessarily fulfill the requirements mentioned above. A method has been proposed for manufacture of large-particle-size ion exchangers, which comprises causing a mixture of polymerization initiator and monomers to be deposited in the matrix of a fiber, subjecting the mixture as deposited in the matrix to polymerization, and thereafter introducing an ion-exchange group into the resultant polymer. While this method produces ion-exchangers with large, controllable particle shape, it fails to produce ion exchangers with the desired properties. Since by this method the functional group is introduced directly into the matrix of the copolymer fiber itself, the copolymer swells significantly upon functionalization. As a consequence of this swelling, strain is generated at the interface between the fiber substrate and the copolymer and this leads to separation of the copolymer from the fibers. The ion exchanger produced by this method, therefore, suffers from poor physical strength. This method is incapable of providing a product with satisfactory physical properties.

We have now found a method which permits the successful manufacture large-particle-size ion exchangers, free from the disadvantages mentioned above.

The ion exchange materials of the invention comprise fibrous ion exchange material comprising a macroporous fibrous mass, the interstices of which contain macroreticular, crosslinked polymer of polyethylenically unsaturated monomer and, optionally, monoethylenically unsaturated monomer, bearing ion exchange functional groups. They may be made, according to the invention, by :

(1) causing monomer to be retained in a macroporous mass of fibers in the presence of a polymerization initiator and an organic solvent which is sparingly soluble or totally insoluble in water,

(2) subjecting the retained monomer to polymerization in an aqueous medium, and

(3) introducing ion-exchange functional groups into the resulting polymer.

It is important to the successful practice of the invention that the fibrous mass have large interstices between adjacent fibers in which to retain monomer, and that these interstices remain during imbibing of the monomer. Japanese Unscreened Patent Publication No. 20390/1977 discloses the polymerization of monomers adsorbed within the fibers themselves, whereas in the present invention the polymer is to be found in the interstices between the fibers. As a result, during the introduction of the ion-exchange functionality the fine pores present in the polymer absorb the strain generated at the interface between the fibers and the copolymer. Consequently, the tendency of the ion exchange material of the present invention to separate at the interface between the fiber and the copolymer is much less and the physical strength may be in consequence be made greater than the ion exchangers of the prior art. The shape and size of the ion exchange material of the invention may be freely selected in the light of end-use requirements, rather than being restricted by the requirements of the preparation method.

The mass of fibers used as the matrix for the ion exchanger of the present invention must possess proper interstices between the adjacent fibers, and it also must have superior chemical resistance and sufficient mechanical strength for the structure to retain its original shape during the agitation required for polymerization in the aquous medium. The fibers should be woven, knitted, bonded or otherwise joined together so that the required mechanical strength is imparted. Woven fabrics and non-woven fabrics may therefore form suitable fiber structures. It is particularly desirable that the fiber structure should be cut to the desired size and shape prior to use in the method of this invention. Useful fibers include natural fibers such as wool, linen and cotton, fibers made of natural polymers, such as cellulose, synthetic polymer fibers such as modified cellulose, polyamides, acrylics, polyolefins including polyethylene and polypropylene, polyesters, polyurethanes, glass fibers and fluorocarbons. Preferred are polyolefin fibers, and most preferred are polyethylene and polyethylene fibers.

Useful monomers include polyethylenically unsaturated polyvinyl monomers or mixtures of monoethylenically unsaturated monomers and polyethylenically unsaturated monomers. Examples of suitable monoethylenically unsaturated monomers are aromatic monomers such as styrene, methyl styrene, ethyl styrene, chlorostyrene and vinylbenzyl chloride, and aliphatic monomers such as methyl acrylate, ethyl acrylate, butyl acrylate, methyl methacrylate, ethyl methacrylate and butyl methacrylate. Examples of suitable polyethylenically unsaturated monomers include aromatic monomers such as divinylbenzene, trivinylbenzene, divinyltoluene and divinylxylene, and aliphatic monomers such as ethylene glycol diacrylate, ethylene glycol dimethacrylate and divinyl adipate.
The selection of other suitable monomers is well within
the ability of one skilled in the preparation of polymers
for ion exchange purposes.

The polymerization initiator used in the process of
the present invention should be soluble in the monomer
solution. Examples of suitable polymerization
initiators include benzoyl peroxide, acetyl peroxide,
lauroyl peroxide, cumene hydroperoxide, and azo-bisisobutyronitrile.

In the practice of the method of the invention, it
is important that the monomer solvent employed be an
organic solvent that is sparingly soluble or totally
insoluble in water; this solvent is present for the
purpose of adjusting the physical behaviour of the polymer
in the retaining structure.

The organic solvents which meet the above requirements fall within three classes:

(1) organic solvents which are soluble in the
monomer used, but are incapable of swelling the polymer
which forms between the fibers;

(2) organic solvents which are soluble in the
monomers, and are capable of swelling the polymer
formed between the fibers.

(3) organic solvents which are mixtures of the
organic solvents of Classes 1 and 2.
Generally, solvents of Class 1 are referred to as
"precipitants" and those of Class 2 as "swelling agents".
All of these solvents function to impart fine pores to
the polymer being formed. A more complete discussion of
solvents, concentration parameters, and other
important considerations in the formation of these fine
pores (macroreticular structure) is found in British
Patents 932125 and 932126. The solvents of Class 1 include iso-octane, n-butanol, t-aminoethanol, methyl isobutyl carbinol, n-heptane, 2-ethylhexanol, and sec-butanol. The solvents of Class 2 include hydrocarbons such as benzene, toluene, xylene and ethylbenzene, and halogenated hydrocarbons such as ethylene dichloride, propylene dichloride, trichloroethane and carbon tetrachloride. Other organic solvents which are usable include those prepared by dissolving linear polymers such as polystyrene, polymethylstyrene, polyacrylic esters and polymethacrylic esters in the abovementioned organic solvents and homogenizing the resulting mixtures. The degree of polymerization of the linear polymer employed in such solutions is not specifically limited. In actual practice, it is preferable to remove the linear polymer from the crosslinked polymer by extraction.

In the process of the present invention, the first step of entraining or imbibing the solution of monomer, organic solvent and polymerization initiator in the fiber mass may generally be accomplished by immersing the fiber mass in the solution and thereafter drawing the excess solution off the wet fiber structure. This procedure has the advantage of allowing the fiber structure to retain the largest volume of solution in the shortest reasonable time. The fiber masses entraining the solution may then be dispersed in an aqueous solution or an aqueous solution containing a dispersant and the dispersion then stirred and heated to induce polymerization of the monomer. The polymerization is carried out in the aqueous solution because of the ease with which the temperature of polymerization can be controlled. Alternatively, the polymerization may be performed by dispersing the fiber masses in advance in an aqueous solution which may contain a dispersant, and adding the monomer solution dropwise to the aqueous solution while agitating to induce polymerization. In either case, the amount of aqueous solution need only be sufficient to permit uniform agitation of the fiber mass in the reaction container. Amounts of aqueous solution 2 to 8 times the total weight of the monomer solution and the fiber masses is generally sufficient. The critical requirement for polymerization temperature is that it be higher than the decomposition temperature of the polymerization initiator. The preferred polymerization temperature is generally from 50 to 100°C.

The step of introducing the ion-exchange group into the polymer thus formed in the fiber structure may involve any of the known ion-exchange functionalization reactions. For example, a cation-exchange resin may be obtained by sulfonating an aromatic polymer with sulfuric acid, chlorosulfonic acid or sulfur trioxide, either directly or in the presence of an organic solvent capable of swelling the entrained polymer, and an anion-exchange resin may be obtained by chloromethylating an aromatic polymer with chlromethyl methyl ether or hydrochloric acid, methanol and formalin, and subsequently aminating the chloromethylation product with amines such as trimethylamine, dimethylethanolamine, ethylenediamine or diethylenetriamine. In some cases, for example, where the entrained polymer is derived from vinylbenzyl chloride, the polymer may be aminated directly. Where an aliphatic ester polymer is the entrained polymer, a cation-exchange resin may be obtained by hydrolyzing the ester linkage. An anion-exchange resin may be obtained by further aminating the resulting cation-exchange resin.

The ion exchange materials of the invention may be used to remove or exchange ions in fluid, especially liquid or vapour, media.

In the following Examples which illustrate some preferred embodiments of the invention and some comparative tests, all percentages and proportions are by weight and all reagents are of good commercial quality unless otherwise specified.

Example 1 and Comparative Tests A and B

Styrene and divinylbenzene as monomers, benzoyl peroxide (hereinafter referred to as BPO) as polymerization initiator, and methyl isobutyl carbinol (hereinafter referred to as MIBC) as organic solvent, in the proportions indicated in Table I were placed in a reaction flask and stirred to achieve a homogenous mixture. A needle non-woven polypropylene fabric, manufactured by Chisso Corporation and marketed under the trademark "Hi-Separay HS-300" was cut into 30-mm squares and a 10-g sample of these squares was added to each of the mixtures, followed by 500 g of water containing 2.5 g of polyvinyl alcohol as a dispersant. The contents of the reaction flask were then agitated and heated to 80°C to induce polymerization. The heating was continued to distill the MIBC from the reaction system, and the fabric containing the resulting polymer was removed from the flask, washed thoroughly with water, and dried at 105°C for 12 hours. The resulting product comprised squares of white product, which were approximately 31 to 32 mm on each side. The product was tested for porosity, specific surface area and yield, and the results are shown below in Table II.

Table I

| Materials Used (g) | Test Run No. | | | | | |
| | 1 | 2 | 3 | 4 | A | B |
|---|---|---|---|---|---|---|
| Styrene | 46 | 32 | 24 | 0 | 46 | 92 |
| Divinylbenzene* | 4 | 18 | 26 | 50 | 4 | 8 |
| MICB | 50 | 50 | 50 | 50 | – | – |
| BPO | 0.5 | 0.5 | 0.5 | 0.5 | 0.25 | 0.5 |

*57% pure divinylbenzene additionally containing 41% of ethylvinylbenzene and 2% of other impurities.

Table II

| Item of Test | Test Run No. | | | | | |
| --- | --- | --- | --- | --- | --- | --- |
| | 1 | 2 | 3 | 4 | A | B |
| Porosity $cm^3/g$ | 0.32 | 0.46 | 0.80 | 0.91 | 0 | 0 |
| Specific Surface Area $(m^2/g)$ | 18 | 56 | 80 | 128 | 0 | 0 |
| Yield (g) | 57 | 58 | 58.8 | 57.5 | 56 | 108 |

Test Run Nos. 1 to 4 were in accordance with this invention, while Test Run Nos. and B produced polymers which were not macroreticular and consequently could not form the basis of ion exchange materials in accordance with this invention.

Example 2 and Comparison

The products of Example 1 and Comparative Tests A and B were sulfonated according to the following procedure. A 10-g portion of the product was placed in a flask and 300 g. of 98% sulfuric acid was added; the mixture was heated and maintained at 120°C for six hours to induce sulfonation. At the end of the reaction period, water was added dropwise through a dropping funnel to hydrate the sulfonation product and dilute the remaining sulfuric acid. This procedure was repeated until the sulfuric acid concentration fell below 0.5%. An aqueous 10% solution of caustic soda was similarly added dropwise to neutralize the sulfonation product and convert it to the sodium ion form. In each case the resulting product was a yellowish brown, strongly acidic cation-exchange resin; the square measured from about 32 to about 36 mm on a side and 3 to 4 mm in thickness. The yield and physical properties of these materials are shown in Table III.

Table III

Product of Run No.

| Item of Test | 1 | 2 | 3 | 4 | A | B |
|---|---|---|---|---|---|---|
| Neutral Salt capacity (meq/g) | 2.35 | 2.65 | 2.10 | 1.46 | 1.40 | 1.07 |
| Water content (%) | 63.0 | 58.1 | 56.2 | 53.3 | 53.3 | 52.4 |
| Yield (g) | 32 | 30 | 30 | 28 | 29 | 28 |
| Separation of polymer from fiber*1 | None | None | None | None | Yes | Yes |
| Physical Strength*2 | 3 | 0 | 2 | 2 | 35 | 42 |

*1  Test by appearance

*2  Obtained by passing acid (1N-HCl) and alkali (1N-NaOH) through the sample for 50 cycles under the pressure of 3 to 4 $kg/cm^2$, determining exchange capacity before and after the passage, and finding loss of exchange capacity due to passage.

It is clear from the Above Table III that the strongly acidic cation exchangers of the invention process better properties than those produced without a macroreticular structure.

Example 3 and Comparison

Products of Example 1 Run 2 and Comparative Test A were chloromethylated and aminated according to the following procedure. A 10-g portion of the product of Example 1 was transferred to a flask, 100 g of ethane dichloride and 100 g of methyl chloromethyl ether were added, and the mixture was allowed to stand for 30 minutes; subsequently, 20 g of anhydrous zinc chloride was added, the mixture was heated to 45°C and maintained at that temperature for seven hours to chloromethylate the sample. Following the reaction, the mixture was washed with cold water to decompose the excess methyl chloromethyl ether and zinc chloride, and then was washed again with water. The chloromethylation product was aminated with an aqueous, 30% solution of trimethylamine, to produce 36 g of yellowish brown ion-exchange material. This product was tested for anion-exchange capacity, water, and physical properties; the results are shown in Table IV.

### Table IV

| Item of Test | Product of Run No. | |
| --- | --- | --- |
| | 2 | A |
| Neutral Salt Capacity (meq/g) | 1.36 | 1.32 |
| Water Content (%) | 58 | 52 |
| Separation of POlymer From Fiber *1 | No | Yes |
| Physical Properties *2 | 3 | 40 |

*1 and *2 as for Table III.

These anion exchange materials were alternatingly saturated with IN hydrochloric acid and IN sodium hydroxide solutions for 50 cycles. In this test, neither layer separation nor degradation of ion-exchange capacity occurred in the sampe of the invention, while the sample without a macroreticular structure showed layer separation of the polymer from the retaining structure, and significant degradation of ion-exchange capacity.

Example 4

In a flask, 26 g of styrene, 14 g of divinylbenzene (57% divinylbenzene, balance largely ethylvinylbenzene), an effective amount of BPO as a polymerization catalyst and 60 g of toluene were mixed to form a homogeneous solution. A non-woven polypropylene fabric, manufactured by Japan Vilene Co., Ltd. and marketed under the trademark STB-1ON", was cut into 30-mm squares, and 10-g samples of the squares were added to the monomer mixture. To the mixture 500 g of water containing 2.5 g of polyvinyl alcohol as a dispersant was added, the contents of the flask were agitated while heating to 75°C and maintaining at that temperature for 8 hours to allow polymerization. After the polymerization reaction was complete, the toluene was removed by distillation, and the product was thoroughly washed with water and dried at 105°C for 12 hours to produce 47 g of material in the form of white, square pieces 32 mm on a side. The product material was found to possess a porosity of 0.14 $cm^3$/g and a specific surface area of 6 $m^2$/g.

This product was sulfonated according to the procedure of Example 2, to produce a s-rongly acidic cation-exchange material weighing 28 g. This cation-exchange material was found to have a neutral salt capacity of 2.38 meq/g and a water content of 53%. When subjected to the 50-cycle acid-base saturation test described in Example 3, neither separation of the ion exchange polymer from the retaining structure, nor degradation of ion exchange capacity, were observed.

## CLAIMS

1. Fibrous ion exchange material comprising a macroporous fibrous mass, the interstices of which contain macroreticular, crosslinked polymer, of polyethylenically unsaturated monomer and, optionally, monoethylenically unsaturated monomer, bearing ion exchange functional groups.

2. Ion exchange material as claimed in Claim 1 wherein the fibrous mass fibers is a woven or non-woven fabric.

3. Ion exchange material as claimed in Claim 1 or 2 wherein the fibers are synthetic fibers.

4. Ion exchange material as claimed in Claim 3 wherein the synthetic fibers are polyolefin fibers.

5. Ion exchange material as claimed in Claim 4 wherein the polyolefin fibers are polyethylene and/or polypropylene fibers.

6. A process for the manufacture of ion exchange material which comprises:

   a) causing a solution containing polyethylenically unsaturated polyvinyl monomer optionally in a mixture with monoethylenically unsaturated monomer to be retained in the interstices of a macroporous mass of fibers in the presence of polymerization initiator and organic solvent sparingly soluble or totally insoluble in water;

b)   polymerizing in an aqueous medium the monomer retained in the fiber structure to form macroreticular polymer; and

c)   introducing ion exchange functionality into the resultant polymer.

7.   A process as claimed in Claim 6 wherein the organic solvent is methyl isobutyl carbinol or toluene.

8.   A process as claimed in Claim 6 or 7 as applied to the production of ion exchange material as claimed in any one of Claims 2 to 5.

9.   The use of ion exchange material as claimed in any of Claims 1 to 5 or as produced by a process as claimed in Claim 6 or 7 to remove or exchange ions in a fluid medium.

10.   The use claimed in Claim 9 wherein the fluid is a liquid or vapour.

0045823

Application number

EP 80 30 2718

**European Patent Office**

**EUROPEAN SEARCH REPORT**

| Category | Citation of document with indication, where appropriate, of relevant passages | Relevant to claim |
|---|---|---|
| | US - A - 3 944 485 (REMBAUM)<br>* Columns 7-9 * | 1,3,6,8-10 |
| | US - A - 4 198 326 (LISHEVSKAYA)<br>* Columns 11,12; claims; column 3, lines 3-6 * | 1-3,8-10 |
| | FR - A - 2 363 600 (MITSUBISHI RAYON)<br>* Page 11, example 1 * | 1,2,6 |
| | CHEMICAL ABSTRACTS, vol. 90, no. 4, 22nd January 1979, page 69, no. 24705t<br>Columbus, Ohio, U.S.A.<br>& JP - A - 78 106 687 (MITSUBISHI RAYON CO., LTD.) 16-09-1978<br>* Abstract * | 1,3,6 |
| | CHEMICAL ABSTRACTS, vol. 84, 1976, page 83, no. 152090b<br>Columbus, Ohio, U.S.A.<br>& JP - A - 75 152 092 (MITSUBISHI RAOYON CO., LTD.) 06-12-1975<br>* Abstract * | 1,3-6 |
| A | DE - A - 2 124 691 (I.C.I.) | |

**DOCUMENTS CONSIDERED TO BE RELEVANT**

**CLASSIFICATION OF THE APPLICATION (Int. Cl.³)**

B 01 J 39/20
41/14
47/00
D 06 M 15/00

**TECHNICAL FIELDS SEARCHED (Int Cl.³)**

B 01 J 47/00
D 06 M 15/00
B 01 J 47/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-07-1981 | WENDLING |

EPO Form 1503.1 06.78